# FASCICULE DE BREVET EUROPEEN

(11) **EP 0 674 753 B1**
(45) Date de publication et mention de la délivrance du brevet: **27.08.1997**
(21) Numéro de dépôt: 95900160.3
(22) Date de dépôt: 19.10.1994
(51) Int. Cl.: F16D 13/70, F16D 13/50

(54) **MODULE D'EMBRAYAGE A COUVERCLE ASSUJETTI PAR ENCLIQUETAGE AU VOLANT**
KUPPLUNGSEINHEIT WOBEI DAS GEHÄUSE MIT EINER SCHNAPPVERBINDUNG AUF DEM SCHWUNGRAD BEFESTIGT IST
CLUTCH UNIT WITH A COVER SECURED BY A CLIP ARRANGEMENT TO THE FLYWHEEL

(30) Priorité: 20.10.1993 FR 9312504
(43) Date de publication de la demande: 04.10.1995
(73) Titulaire: VALEO, 75017 Paris (FR)
(72) Inventeur: SEVENNEC, Yvon, . (FR); VIOLA, Paolo, F-75007 Paris (FR)
(74) Mandataire: Gamonal, Didier
(86) Numéro de dépôt international: FR9401214
(87) Numéro de publication internationale: WO9511391

(56) Documents cités:
- DE-A- 3 802 955
- FR-A- 2 526 105
- GB-A- 2 248 476
- US-A- 2 201 340

## Description

L'invention concerne les modules d'embrayage, notamment pour véhicules automobiles.

Ainsi qu'on le sait, un module d'embrayage comporte, de manière unitaire, successivement axialement un mécanisme, une friction d'embrayage et un volant, le mécanisme étant lui-même formé d'un couvercle, qui est assujetti au volant, d'un diaphragme, qui prend appui sur le couvercle, et d'un plateau de pression, sur lequel porte le diaphragme pour serrage des garnitures de frottement du disque de friction entre le plateau de pression et le volant.

Pour l'assujettissement du couvercle au volant, il est connu de prévoir, au moins localement, sur le couvercle, des moyens d'engagement par lesquels ce couvercle est en prise avec une gorge prévue corollairement à cet effet sur la tranche périphérique externe du volant.

C'est le cas, par exemple, dans certaines au moins des formes de réalisation décrites dans les documents FR-A-2 526 105 et FR-A-2 661 722.

Dans ces documents, les moyens d'engagement du couvercle sont des moyens de sertissage, le couvercle comportant un prolongement par lequel il est engagé axialement sur la tranche périphérique externe du volant et dont certaines portions, au moins, sont ensuite refoulées radialement dans la gorge de celui-ci.

Imposant d'intervenir radialement, l'opération de sertissage nécessaire complique inévitablement le montage elle nécessite en outre un outillage complexe.

Dans le document GB-A-2 248 476 ces moyens d'engagement comportent au moins une patte d'encliquetage, qui s'étend globalement axialement, en étant élastiquement déformable radialement, et qui présente localement, radialement en direction de l'axe de l'ensemble, une déformation par laquelle elle est en prise avec la gorge du volant.

Cette déformation présente d'un seul tenant successivement axialement un premier tronçon qui fait tronçon de rétreint en étant dirigé globalement vers l'axe de l'ensemble, et un deuxième tronçon, qui fait tronçon d'engagement.

Pour l'assujettissement du couvercle au volant, il suffit donc d'engager axialement le couvercle sur le volant jusqu'à ce que la déformation de sa ou de ses pattes d'encliquetage vienne en prise avec la gorge de celui-ci.

En service, cette patte d'encliquetage est soumise aux effets de la centrifugation. Il peut en résulter, pour cette patte d'encliquetage, le risque d'échapper intempestivement au volant, avec desolidarisation du mécanisme par rapport au volant.

La présente invention à pour objet de pallier cet inconvénient.

Suivant l'invention, une couronne étant engagée sur la tranche périphérique externe du volant, ladite couronne recouvre au moins partiellement la gorge du volant en y confinant ainsi au moins pour partie l'extrémité libre de la patte d'encliquetage.

Ainsi la couronne est engagée sur la tranche périphérique externe du volant pour maintenir cette ou ces pattes d'encliquetage. En outre, on peut réduire l'effort d'encliquetage en prévoyant un jeu radial entre le volant et la partie principale ou courante de la patte d'encliquetage puisque par la suite la couronne bloque ladite patte.

Toute centrifugation de ce ou ces pattes d'encliquetage est ainsi évitée, un blocage étant réalisé à l'aide de ladite couronne.

Ainsi on obtient un module qui ne risque pas de se disloquer en service.

Avantageusement le premier tronçon de la déformation s'étend obliquement par rapport à l'axe de l'ensemble en se rapprochant dudit axe au fur et à mesure qu'il s'éloigne de la friction d'embrayage et il on est de même du flanc correspondant de la gorge contre lequel vient en appui ledit premier tronçon.

Grâce à cette disposition on peut rattraper les jeux entre le couvercle et le volant et serrer le couvercle.

Avantageusement pour ce faire, un jeu radial existe entre le fond de la gorge et le deuxième tronçon de la déformation de ou des pattes d'encliquetage logées dans la gorge.

Les caractéristiques et avantages de l'invention ressortiront d'ailleurs de la description qui va suivre, à titre d'exemple, en référence aux dessins schématiques annexés sur lesquels :
- la figure 1 est une vue en coupe axiale d'un module d'embrayage suivant l'invention ;
- la figure 2 est une vue partielle en coupe axiale qui, reprenant pour partie celle de la figure 1, illustre le montage de ce module d'embrayage ;
- la figure 3 est également une vue partielle en coupe axiale qui, reprenant pour partie celle de la figure 1, se rapporte à une variante de réalisation.

Tel qu'illustré sur ces figures, le module d'embrayage 10 suivant l'invention, qui forme un ensemble unitaire, comporte successivement axialement, de manière connue en soi, un mécanisme 11, une friction d'embrayage 12, et un volant 13.

Le mécanisme 11 comporte, lui-même, successivement axialement, un couvercle 14, qui, tel que décrit ultérieurement, est assujetti au volant 13, un diaphragme 15, qui prend appui sur le couvercle 14, et un plateau de pression 16, sur lequel porte le diaphragme 15.

Ici, le mécanisme 11 est de type "poussé". Le diaphragme 15 prend donc appui sur le couvercle 14 du côté de la périphérie de plus petit diamètre de sa partie périphérique 18 formant rondelle Belleville, cependant qu'il porte sur le plateau de pression 16 du côté de la périphérie de plus grand diamètre de celle-ci.

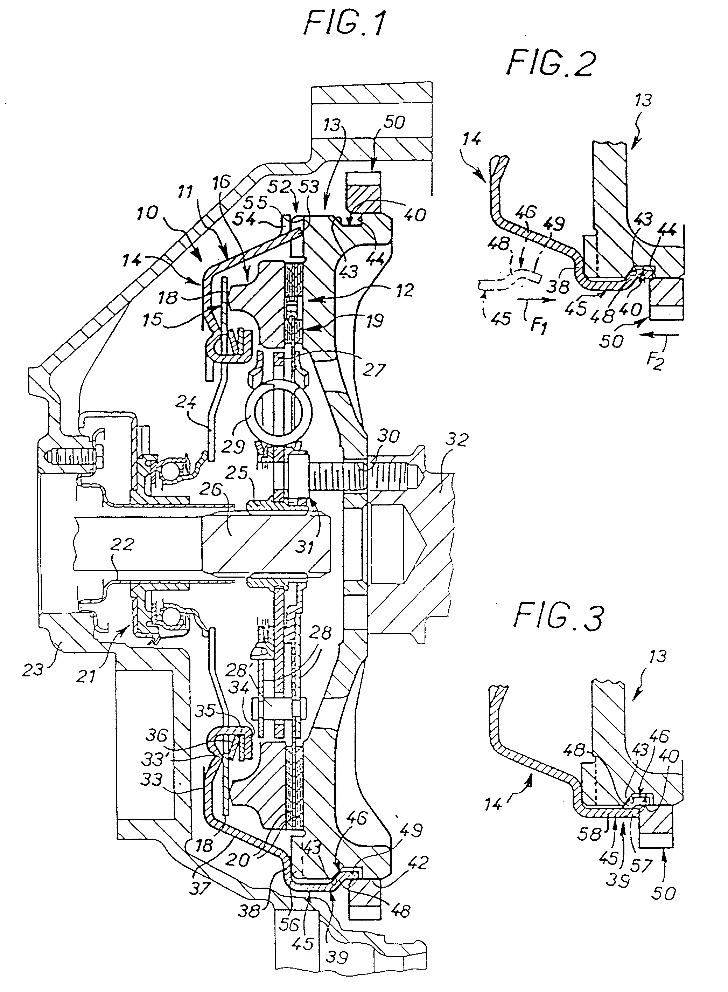

Sous la sollicitation du diaphragme 15, le plateau de pression 16 est apte à serrer contre le volant 13 les garnitures de frottement 20 du disque de friction 19 que comporte la friction d'embrayage 12. Pour le desserrage de ces garnitures de frottement 20, il est prévu, tel que représenté en traits fins sur la figure 2, une butée de débrayage 21, qui, montée coulissante axialement sur un manchon 22 solidaire du carter 23 de l'ensemble, est apte à agir en poussée sur les doigts 24 que forme la partie centrale du diaphragme 15. Ici, la friction d'embrayage 12 est à moyeu amortisseur.

Outre un moyeu 25, par lequel elle est adaptée à être calée en rotation sur un arbre mené 26, en l'espèce l'arbre de sortie d'une boîte de vitesses, et un voile de moyeu 27, qui est solidaire, ici par sertissage, du moyeu 25, elle comporte deux rondelles de guidage 28, qui s'étendent chacune respectivement de part et d'autre du voile de moyeu 27, et dont est solidaire le disque de friction 19, avec, interposés circonférentiellement entre le voile de moyeu 27 et ces rondelles de guidage 28, des moyens élastiques à action circonférentielle, ici des ressorts 29 du type ressort à boudin, dont chacun est individuellement logé pour partie dans une fenêtre du voile de moyeu 27 et pour partie dans des fenêtres des rondelles de guidage 28.

Ici, le disque de friction 19 est accolé à l'une des rondelles de guidage 28 et il est solidarisé à celle-ci par des colonnettes 281 qui solidarisent l'une à l'autre ces rondelles de guidage 28.

Ici, le volant 13 est d'un seul tenant en étant en matière moulable, tel que de la fonte.

Dans sa partie centrale, il comporte plusieurs perçages 30, répartis circulairement, pour le passage de vis de fixation 31 propres à permettre de rapporter l'ensemble sur un arbre menant 32, en l'espèce le vilebrequin d'un moteur à combustion interne.

Ici, le couvercle 14 du mécanisme 11 est en tôle emboutie et il comporte, transversalement, un fond 33, qui, s'étendant annulairement, fournit, ici par un cordon 33 formé par emboutissage, un appui primaire à la partie périphérique 18 formant rondelle Belleville du diaphragme 15, d'un premier côté de celle-ci, et dont sont issues des pattes 34 fournissant un appui secondaire à cette partie périphérique 18, de l'autre côté de celle-ci, par l'intermédiaire d'une rondelle entretoise 35 et d'une rondelle élastique 36.

Le diaphragme 15 est ainsi monté de manière pivotante sur le couvercle 14. Le couvercle 14 comporte, en outre, périphériquement, une paroi latérale 37, par laquelle il contourne successivement le diaphragme 15 et le plateau de pression 16, et qui est ici globalement tronconique, avec, en section transversale, un contour circulaire.

Ici, le couvercle 14 comporte, encore, transversalement, un rebord 38, qui s'étend radialement en direction opposée au fond 33 et à l'axe de l'ensemble, et par lequel il porte axialement sur le volant 13. Le couvercle 14 comporte, enfin, au moins localement, pour son assujettissement au volant 13, des moyens d'engagement 39 par lesquels il est en prise avec une gorge 40 prévue à cet effet sur la tranche périphérique externe 42 du volant 13.

Ici, la gorge 40 s'étend circulairement de manière continue tout autour de l'axe de l'ensemble.

Soit 43 son flanc du côté du mécanisme 11 et 44 son flanc du côté opposé à celui-ci.

Les moyens d'engagement 39 du couvercle 14 sont des moyens d'encliquetage. Ils comportent au moins une patte d'encliquetage 45, qui, ici issue, au moins localement, du rebord 38, d'un seul tenant avec celui-ci, s'étend globalement axialement, en étant élastiquement déformable radialement, et qui présente localement, radialement en direction de l'axe de l'ensemble, une déformation 46 par laquelle elle est en prise avec la gorge 40 du volant 13.

Ici, les moyens d'engagement 39 du couvercle 14 comportent, de manière distincte, plusieurs pattes d'encliquetage 45 réparties circulairement.

Mais, en variante, une seule patte d'encliquetage 45 pourrait être prévue de manière continue sur 360°, pourvu qu'elle présente radialement la flexibilité suffisante.

Ici, la déformation 46 que présente une patte d'encliquetage 45 pour coopération avec la gorge 40 du volant 13 affecte l'extrémité libre de cette patte d'encliquetage 45.

Elle comporte, d'un seul tenant, successivement axialement, un premier tronçon 48, qui fait tronçon de rétreint, parce qu'il est globalement dirigé vers l'axe de l'ensemble, et un deuxième tronçon 49, qui fait tronçon d'engagement.

Le premier tronçon 48 est propre à venir en appui sur le flanc 43 de la gorge 40 du côté du mécanisme 11, tandis que le deuxième tronçon 49 est plus proche radialement de l'axe du module que le premier tronçon 48.

Suivant une caractéristique, le premier tronçon 48 s'étend obliquement par rapport à l'axe de l'ensemble, en se rapprochant de cet axe au fur et à mesure qu'il s'éloigne de la friction d'embrayage 12.

Le flanc 43 correspondant de la gorge 40 du volant 13 s'étend lui-même obliquement, de manière sensiblement complémentaire.

Par contre, l'autre flanc 44 de cette gorge 40 est ici droit. Le deuxième tronçon 49 est admis à pénétrer dans la gorge 40.

Au repos, et tel que schématisé en traits interrompus sur la figure 2, le deuxième tronçon 49 de la déformation 46 que présente une patte d'encliquetage 45 s'étend ici lui aussi obliquement par rapport à l'axe de l'ensemble.

Mais il s'écarte de cet axe au fur et à mesure qu'il s'éloigne de la friction d'embrayage 12.

Suivant l'invention, une couronne 50, qui est ici la couronne de démarreur, est engagée sur la tranche périphérique externe 42 du volant 13, et il en est tiré profit pour assurer radialement le maintien des pattes d'encliquetage 45, pour le blocage de celles-ci.

A cet effet, cette couronne 50 recouvre au moins partiellement la gorge 40 du volant 13, en y confinant ainsi au moins pour partie l'extrémité libre des pattes d'encliquetage 45.

Ici, entre le couvercle 14 du mécanisme 11 et le volant 13 interviennent également des moyens de butée circonférentielle 52 pour le blocage en rotation de ce couvercle 14 sur le volant 13.

Ici, pour réduction du nombre des pièces, ces moyens de butée circonférentielle 52 comportent, de place en place, des ergots 53, qui, prolongeant localement la paroi latérale 37 du couvercle 14 à la faveur d'échancrures 54 de son rebord 38, sont chacun individuellement en prise avec des rainures 55 affectant radialement localement le volant 13 au-delà du disque de friction 19 de la friction d'embrayage 12.

Ici, ces rainures 55 affectent une nervure 56 que le volant 13 présente annulairement en saillie à sa périphérie externe et sur laquelle porte le rebord 38 du couvercle 14.

Les nervures 56 et les rainures 55 sont obtenues avantageusement par moulage.

De manière connue en soi, et non visible sur les figures, le plateau de pression 16 est solidaire en rotation du couvercle 14 tout en étant mobile axialement par rapport à celui-ci, à l'aide par exemple de languettes qui s'étendent transversalement entre ce couvercle 14 et lui.

Au montage, c'est-à-dire lorsque le mécanisme 11 est mis en place, le couvercle 14 est engagé axialement sur le volant 13, suivant la flèche F1 de la figure 2, jusqu'à ce que, par son premier tronçon 48, la déformation 46 de ses pattes d'encliquetage 45 vienne en prise avec le flanc 43 de la gorge 40 de celui-ci.

Ainsi qu'il est aisé de le comprendre, l'obliquité du deuxième tronçon 49 de cette déformation 46 facilite cet engagement.

En variante, ou en complément, il est possible d'abattre dans le même but par un chanfrein l'arête correspondante du volant 13.

Quoi qu'il en soit, l'engagement axial du couvercle 14 sur le volant 13 implique une simple déformation élastique temporaire de ses pattes d'encliquetage 45.

Ici un léger jeu radial existe entre la tranche périphérique externe 42 du volant 13 et la partie axiale des pattes d'encliquetage 45 comprise entre le rebord 38 et le premier tronçon 48 ce qui permet d'augmenter la longueur dudit tronçon 48 tout en facilitant le montage du couvercle 14.

En effet, grâce à ce jeu on peut réduire l'effort de montage tout en ayant par la suite un blocage grâce à la couronne 50 engagée sur le deuxième tronçon 49 (figure 1) qui est rabattu ainsi vers l'intérieur avec application ferme du premier tronçon 48 contre le flanc 43.

Sur les figures 1 et 2, le rebord 38 du couvercle 14 porte sur le volant 13, en fournissant ainsi une base de référence pour la cote d'implantation du diaphragme 15.

Les appuis conjoints, mais de sens axialement opposés, sur le volant 13, du rebord 38 et du premier tronçon 48 de la déformation 46 des pattes d'encliquetage 45 suffisent pour éviter tout jeu axial du couvercle 14 par rapport au volant 13, l'obliquité du premier tronçon 48 de la déformation 46 des pattes d'encliquetage 45 permettant de rattraper les jeux entre ces pièces et de se satisfaire des tolérances de fabrication entre celles-ci.

Le rebord 38 du couvercle 14 se trouve donc serré en appui contre le volant 13. En outre les pattes d'encliquetage sont robustes.

La couronne 50, qui, si désiré, a été prépositionnée sur la tranche périphérique externe 42 du volant 13 après avoir été chauffée pour son frettage sur celui-ci, est ensuite déplacée axialement sur cette tranche périphérique externe 42, suivant la flèche F2 de la figure 2, jusqu'à venir recouvrir au moins partiellement la gorge 40 du volant 13, et, donc, l'extrémité libre des pattes d'encliquetage 45 du couvercle 14, tel que représenté à la figure 1. Avantageusement la couronne 50 (figures 1 à 3) est chanfreinée pour venir en contact avec l'extrémité du deuxième tronçon 49.

Toute centrifugation des pattes d'encliquetage 45 est ainsi évitée.

En variante, la couronne 50 est solidarisée au volant 13, par exemple par soudage. A la figure 3, chacune des pattes d'encliquetage 45 présente, au moins localement, un ergot 57, sur lequel porte axialement la couronne 50, et l'engagement axial de cette couronne 50 sur le volant 13 est fait suffisant pour que, du côté opposé à celle-ci, ces pattes d'encliquetage 45 soient conjointement axialement en appui sur le flanc 43 correspondant de la gorge 40 du volant 13 par leur déformation 46, et, plus précisément, par le premier tronçon 48 de celle-ci. Ainsi, le couvercle 14 se trouve en quelque sorte axialement pincé entre, d'une part, le flanc 43 de la gorge 40 du volant 13, et, d'autre part, la couronne 50.

On notera qu'un jeu radial existe entre la tranche périphérique externe 42 du volant 13 et les ergots 57.

Dans un tel cas, le rebord 38 du couvercle 14 n'est plus nécessairement au contact du volant 13, la base de référence nécessaire à l'implantation du diaphragme 15 étant fournie par exemple par la couronne 50. On simplifie donc le couvercle.

De ce point de vue, au moins, le rebord 38 du couvercle 14 peut même être supprimé.

Ici, l'ergot 57 est directement dans le prolongement de la partie courante (ou principale) 58 des pattes d'encliquetage 45, la déformation 46 de celles-ci étant formée à la faveur d'un simple cisaillage local de cette partie courante 58. La couronne 50 porte donc axialement sur la tranche de la partie courante 58 des pattes d'encliquetage 45. Pour le reste, les dispositions sont du même type que les précédentes. On appréciera que le cisaillage de la déformation 46 rend celle-ci plus robuste que celle du document GB-A-2 248 476, car il existe plus de matière au niveau de la zone d'enracinement des déformations 46.

Dans tous les cas un jeu radial existe entre la partie courante ou principale de pattes et la tranche 42 du couvercle 13 pour réduire l'effort de montage.

La présente invention ne se limite d'ailleurs pas aux formes de réalisation décrites et représentées, mais englobe toute variante d'exécution.

En particulier, au lieu de mettre en oeuvre des pattes 34 venues du couvercle 14, les moyens d'assemblage assujettissant de manière pivotante à ce couvercle 14 le diaphragme 15 peuvent mettre en oeuvre des colonnettes, comme décrit par exemple dans le document FR-A-1 524 350 et son correspondant US-A-3,499,512.

Le volant 13 peut être en deux parties et appartenir à un volant amortisseur comportant deux masses montées rotatives l'une par rapport à l'autre à l'encontre de moyens élastiques. Dans ce cas il faut prévoir des trous en coïncidence dans le diaphragme, la friction d'embrayage et les deux masses pour passage d'outil de fixation et vissage des vis de fixation du module sur le vilebrequin du moteur du véhicule.

Bien entendu, le volant pour comporter un flasque de support destiné à être fixé sur le vilebrequin et une couronne fixée sur ledit flasque. Ladite couronne est dotée alors de la gorge et offre une face de friction à la garniture de frottement 20 concernée de la friction d'embrayage.

Au lieu d'un diaphragme le mécanisme peut présenter une pluralité de ressorts helicoïdaux associés, de manière connue en soi, à des leviers de débrayage.

L'embrayage peut être du type tiré, la périphérie externe de la rondelle Belleville du diaphragme 15 prenant alors appui sur le fond du couvercle, tandis que la périphérie interne de ladite rondelle Belleville est alors en appui sur le plateau de pression 16.

Enfin la couronne 50 peut-être distincte de la couronne de démarreur.

Dans tous les cas, avantageusement la couronne 50 a l'extrémité de son alésage interne chanfreinée pour venir en contact avec l'extrémité libre de la ou les pattes d'encliquetage 45 et rabattre le deuxième tronçon 49 vers l'intérieur de la gorge 40, un jeu radial existant alors entre le fond de la gorge 40 et le deuxième tronçon 49 avec serrage du premier tronçon 48 au contact du flanc 43.

## Revendications

1. Module d'embrayage comportant successivement axialement un mécanisme (11), une friction d'embrayage (12) et un volant (13), ledit mécanisme (11) comportant lui-même un couvercle (14) qui, pour son assujéttisement au volant (13) comporte, au moins localement, des moyens d'engagement (39) par lesquels il est en prise avec une gorge (40) prévue à cet effet sur la tranche périphérique externe (42) du volant (13), dans lequel les moyens d'engagement (39) du couvercle (14) comportent au moins une patte d'encliquetage (45), qui s'étend axialement, en étant élastiquement déformable radialement, et qui présente localement, radialement en direction de l'axe de l'ensemble, une déformation (46) par laquelle elle est en prise avec la gorge (40) du volant (13) et dans lequel la déformation (46) de la patte d'encliquetage (45) affecte l'extrémité libre de celle-ci et comporte d'un seul tenant, successivement axialement, un premier tronçon (48) qui fait tronçon de rétreint en étant globalement dirigé vers l'axe de l'ensemble, et un deuxième tronçon (49) qui fait tronçon d'engagement, caractérisé en ce qu'une couronne (50) étant engagée sur la tranche périphérique externe (42) du volant (13), ladite couronne (50) recouvre au moins partiellement la gorge (40) du volant (13), en y confinant ainsi au moins pour partie l'extrémité libre de la patte d'encliquetage (45).

2. Module selon la revendication 1, caractérisé en ce que, au repos, le deuxième tronçon (49) de la déformation (46) de la patte d'encliquetage (45) s'étend obliquement par rapport à l'axe de l'ensemble en s'écartant dudit axe au fur et à mesure qu'il s'éloigne de la friction d'embrayage (12).

3. Module selon la revendication 1, caractérisé en ce que le premier tronçon (48) de la déformation (46) de la patte d'encliquetage (45) s'étend obliquement par rapport à l'axe de l'ensemble, en se rapprochant dudit taxe au fur et à mesure qu'il s'éloigne de la friction d'embrayage (12) et il en est de même du flanc (43) correspondant de la gorge (40) du volant (13).

4. Module selon la revendication 3, caractérisé en ce que la patte d'encliquetage (45) présente au moins localement un ergot (57) sur lequel porte axialement la couronne (50), et, du côté opposé à celle-ci, elle est axialement en appui par sa déformation (46) sur le flanc (43) correspondant de la gorge (40) du volant (13).

5. Module selon la revendication 4, caractérisé en ce que l'ergot (57) est dans le prolongement de la partie courante (58) de la patte d'encliquetage (45), la déformation (46) de celle-ci étant formée à la faveur d'un simple cisaillage de cette partie courante (58).

6. Module selon la revendication 3, dans lequel la patte d'encliquetage (45) est issue, au moins localement, d'un rebord (38) du couvercle (14) s'étendant radialement par lequel le couvercle (14) porte axialement sur le volant (13), caractérisé en ce que le rebord (38) du couvercle (14) est serré en appui contre le volant (13) par l'intermédiaire du premier tronçon (48) de la patte d'encliquetage (5).

7. Module d'embrayage selon l'une quelconque des revendications précédentes, caractérisé en ce que les moyens d'engagements (39) du couvercle (14) comportent, de manière distincte plusieurs pattes d'encliquetage (45) réparties circulairement.

8. Module d'embrayage suivant l'une quelconque des revendications précédentes dans lequel le couvercle (14) présente une paroi latéral (37) et un rebord radial (38) par lequel il porte axialement contre le volant (13) et dans lequel des moyens de butée circonférentielle (52) interviennent entre le couvercle (14) et le volant (13) pour blocage en rotation dudit couvercle (14) sur ledit volant (13), caractérisé en ce que les moyens de butée circonférentielle (52) comportent de place en place des ergots (57), qui prolongeant localement la paroi latérale (37) du couvercle (14), à la faveur d'échancrures (54) de son rebord (38), sont chacun individuellement en prise avec des rainures (55) affectant radialement le volant (13) au delà du disque de friction (19) que comporte la friction d'embrayage (12).

9. Module suivant l'une quelconque des revendications précédentes, caractérisé en ce qu'un jeu radial existe entre la partie courante (58) de la patte d'encliquetage (45) et la tranche périphérique externe (42) du volant (13).

## Patentansprüche

1. Kupplungseinheit, umfassend in axialer Abfolge einen Mechanismus (11), eine Reibungskupplungsscheibe (12) und ein Schwungrad (13), wobei der besagte Mechanismus (11) selbst einen Deckel (14) umfaßt, der für seine Befestigung am Schwungrad (13), zumindest örtlich, Eingriffsmittel (39) enthält, durch die er mit einer Auskehlung (40) im Eingriff steht, die dazu an der äußeren Umfangskante (42) des Schwungrads (13) vorgesehen ist, wobei die Eingriffsmittel (39) des Deckels (14) mindestens einen Rastansatz (45) umfassen, der sich axial erstreckt und radial elastisch verformbar ist und der örtlich, radial in Richtung der Achse der Einheit, eine Verformung (46) aufweist, durch die er mit der Auskehlung (40) des Schwungrads (13) im Eingriff steht, und wobei die Verformung (46) des Rastansatzes (45) auf dessen freies Ende übergreift und einstückig, in axialer Abfolge, ein erstes Teilstück (48), das ein Einschnürungsstück bildet und insgesamt zur Achse der Einheit gerichtet ist, und ein zweites Teilstück (49) umfaßt, das ein Eingriffsstück bildet, **dadurch gekennzeichnet,** daß ein Kranz (50), der an der äußeren Umfangskante (42) des Schwungrads (13) eingesetzt ist, zumindest teilweise die Auskehlung (40) des Schwungrads (13) überdeckt, wobei er dort so wenigstens zum Teil das freie Ende des Rastansatzes (45) einschließt.

2. Kupplungseinheit nach Anspruch 1, **dadurch gekennzeichnet,** daß sich im Ruhezustand das zweite Teilstück (49) der Verformung (46) des Rastansatzes (45) schräg im Verhältnis zur Achse der Baueinheit erstreckt, wobei es sich mit zunehmender Entfernung von der Reibungskupplungsscheibe (12) von der besagten Achse entfernt.

3. Kupplungseinheit nach Anspruch 1 , **dadurch gekennzeichnet,** daß sich das erste Teilstück (48) der Verformung (46) des Rastansatzes (45) schräg im Verhältnis zur Achse der Baueinheit erstreckt, wobei es sich mit zunehmender Entfernung von der Reibungskupplungsscheibe (12) an die besagte Achse annähert, was ebenso für die entsprechende Flanke (43) der Auskehlung (40) des Schwungrads (13) gilt.

4. Kupplungseinheit nach Anspruch 3 , **dadurch gekennzeichnet,** daß der Rastansatz (45) zumindest örtlich einen Vorsprung (57) aufweist, auf dem der Kranz (50) axial aufliegt, und daß er auf der diesem gegenüberliegenden Seite axial mit seiner Verformung (46) auf der entsprechenden Flanke (43) der Auskehlung (40) des Schwungrads (13) anliegt.

5. Kupplungseinheit nach Anspruch 4 , **dadurch gekennzeichnet,** daß sich der Vorsprung (57) in der Verlängerung des Hauptteils (58) des Rastansatzes (45) befindet, wobei dessen Verformung (46) mittels einer einfachen Scherung dieses Hauptteils (58) ausgebildet ist.

6. Kupplungseinheit nach Anspruch 3, wobei der Rastansatz (45) zumindest örtlich aus einer radial verlaufenden Randleiste (38) des Deckels (14) herausgearbeitet ist, mit welcher der Deckel (14) axial am Schwungrad (13) aufliegt, **dadurch gekennzeichnet,** daß die Randleiste (38) des Deckels (14) über das erste Teilstück (48) des Rastansatzes (5) in Anlage an das Schwungrad (13) angedrückt ist.

7. Kupplungseinheit nach einem der vorangehenden Ansprüche, **dadurch gekennzeichnet,** daß die Eingriffsmittel (39) des Deckels (14) getrennt mehrere Rastansätze (45) umfassen, die umfangsmäßig verteilt sind.

8. Kupplungseinheit nach einem der vorangehenden Ansprüche, wobei der Deckel (14) eine Seitenwand (37) und eine radiale Randleiste (38) aufweist, mit der er axial am Schwungrad (13) anliegt, und wobei Umfangsanschlagmittel (52) zwischen dem Deckel (14) und dem Schwungrad (13) wirksam sind, um den besagten Deckel (14) gegen Verdrehung an dem besagten Schwungrad (13) zu sichern, **dadurch gekennzeichnet,** daß die Umfangsanschlagmittel (52) stellenweise Vorsprünge (57) umfassen, die örtlich die Seitenwand (37) des Deckels (14) anhand von Aussparungen (54) seiner Randleiste (38) verlängern und jeweils einzeln mit Nuten (55) im Eingriff stehen, die radial auf das Schwungrad (13) über die Reibscheibe (19) hinaus übergreifen, die zur Reibungskupplungsscheibe (12) gehört.

9. Kupplungseinheit nach einem der vorangehenden Ansprüche, **dadurch gekennzeichnet,** daß ein radiales Spiel zwischen dem Hauptteil (58) des Rastansatzes (45) und der äußeren Umfangskante (42) des Schwungrads (13) besteht.

## Claims

1. Clutch module comprising, an axial succession, a mechanism (11), a clutch friction element (12) and a flywheel (13), the said mechanism (11) itself comprising a cover (14) which, for its attachment to the flywheel (13), has, at least locally, engagement means (39) through which it is in engagement with a groove (40) provided for that purpose on the outer peripheral edge (42) of the flywheel (13), wherein the engagement means (39) of the cover (14) comprise at least one snap lug (45) which extends axially, being elastically deformable radially, and which has locally, radially in the direction of the axis of the assembly, a deformation (46) through which it is in engagement with the groove (40) in the flywheel (13), and wherein the deformation (46) of the snap lug (45) is formed in the free end of the latter and has in one piece, in axial succession, a first portion (48) which is a hammered-out portion being directed generally towards the axis of the assembly, and a second portion (49) which is an engagement portion, characterised in that, a ring (50) being engaged on the outer peripheral edge (42) of the flywheel (13), the said ring (50) at least partially covers the groove (40) in the flywheel (30), thus confining therein, at least partly, the free end of the snap lug (45).

2. Module according to Claim 1, characterised in that, at rest, the second portion (49) of the deformation (46) of the snap lug (45) extends obliquely with respect to the axis of the assembly, diverging from the said axis in the direction away from the clutch friction element (12).

3. Module according to Claim 1, characterised in that the first portion (48) of the deformation (46) of the snap lug (45) extends obliquely with respect to the axis of the assembly, converging with the said axis in the direction away from the clutch friction element (12), the same being true for the corresponding flank (43) of the groove (40) in the flywheel (13).

4. Module according to Claim 3, characterised in that the snap lug (45) has, at least locally, a lug (57) on which the ring (50) bears axially, and, on the side opposite to the latter, it is in axial engagement through its deformation (46) with the corresponding flank (43) of the groove (40) in the flywheel (13).

5. Module according to Claim 4, characterised in that the lug (57) is an extension of the main portion (58) of the snap lug (45), the deformation (46) of the latter being formed by simple shearing of this main portion (58).

6. Module according to Claim 3, in which the snap lug (45) issues at least locally from a flange (38) on the cover plate (14) extending radially, through which the cover plate (14) bears axially on the flywheel (13), characterised in that the flange (38) on the cover plate (14) is clamped in engagement against the flywheel (13) through the first portion (48) of the snap lug (45).

7. Clutch module according to any one of the preceding claims, characterised in that the engagement means (39) of the cover plate (14) include, separately, several snap lugs (45) spaced apart on a circle.

8. Clutch module according to any one of the preceding claims, in which the cover plate (14) has a side wall (37) and a radial flange (38) through which it bears axially against the flywheel (13), and in which circumferential abutment means (52) act between the cover plate (14) and the flywheel (13) so as to lock the said cover plate (14) on the said flywheel (13) with respect to rotation, characterised in that the circumferential abutment means (52) include, from place to place, lugs (57) which, locally extending the side wall (37) of the cover plate (14), by virtue of notches (54) in its flange (38), are each individually in engagement with radial grooves (55) formed in the flywheel (13) beyond the friction disc (19) which is part of the clutch friction element (12).

9. Module according to any one of the preceding claims, characterised in that there is a radial clearance between the main portion (58) of the snap lug (45) and the outer peripheral edge (42) of the flywheel (13).
